# EUROPÄISCHE PATENTSCHRIFT

(11) **EP 3 530 022 B1**
(45) Veröffentlichungstag und Bekanntmachung des Hinweises auf die Patenterteilung: **02.06.2021**
(21) Anmeldenummer: 17742413.2
(22) Anmeldetag: 13.07.2017
(51) Int. Cl.: H04W 12/06

(54) **MASCHINE ZUR VERARBEITUNG VON LEBENSMITTELN UND VERPACKUNGSPRODUKTEN**
MACHINE FOR PROCESSING FOODS AND PACKAGING PRODUCTS
MACHINE DE TRAITEMENT DE DENRÉES ALIMENTAIRES ET DE PRODUITS D'EMBALLAGE

(30) Priorität: 20.10.2016 DE 102016220544
(43) Veröffentlichungstag der Anmeldung: 28.08.2019
(73) Patentinhaber: Krones AG, 93073 Neutraubling (DE)
(72) Erfinder: HOFERER, Maximilian, 93073 Neutraubling (DE); WISCHINSKI, Martin, 93073 Neutraubling (DE); BIRKENSEER, Thomas, 93073 Neutraubling (DE)
(74) Vertreter: Grünecker Patent- und Rechtsanwälte PartG mbB
(86) Internationale Anmeldenummer: PCT/EP2017/067724
(87) Internationale Veröffentlichungsnummer: WO 2018/072896

(56) Entgegenhaltungen:
- EP-A1- 2 927 854
- US-A1- 2013 024 542

## Beschreibung

Die Erfindung betrifft eine Maschine zur Verarbeitung von Lebensmitteln und Verpackungsprodukten, umfassend Steuerelemente zum Steuern von Komponenten der Maschine und eine Bedienkonsole zum Bedienen der Maschine mittels der Steuerelemente.

US 2013/024542 A1 zeigt, dass ein Mobilgerät zur Steuerung industrieller Automatisierungskomponenten verwendet wird. EP 2 927 854 A1 zeigt ein Mobilgerät, das eine Interaktion eines Benutzers mit Industriekomponenten ermöglicht.

In der Lebensmittel- und Verpackungsindustrie ist es üblich, dass Maschinen durch Benutzereingaben in eine Bedienkonsole bedient werden können, insbesondere indem angegeben wird, wie Steuerelemente im Betrieb die Komponenten der Maschine steuern.

Solche Bedienkonsolen haben in der Praxis jedoch noch diverse weitere Funktionen. Dazu gehört insbesondere, dass verschiedene Informationen über die Maschine erfasst und gespeichert werden. Insbesondere werden häufig Informationen zur Fehlerdiagnose oder Maschinenwartung gespeichert, beispielsweise Zustandsdaten der Maschine, eine Auflistung verwendeter Betriebsparameter, eine Auflistung von im Betrieb detektierten Messwerten oder dergleichen. Üblicherweise werden im Bedarfsfall ein externes Speichermedium, beispielsweise ein USB-Stick, an die Bedienkonsole angeschlossen und diese Informationen auf das Speichermedium kopiert. So können die Informationen dann an anderer Stelle ausgewertet werden, häufig nicht beim Kunden, sondern beim Hersteller.

Das oben beschriebene Vorgehen ist vergleichsweise umständlich für den Benutzer. Außerdem kann das bekannte Vorgehen auch unsicher sein, beispielsweise weil nicht auszuschließen ist, dass ein Benutzer ein Speichermedium verwendet, das mit Viren kontaminiert ist, oder wenn der Datenzugriff keiner geeigneten Kontrolle unterliegt.

Es ist also Aufgabe der Erfindung, eine Maschine zur Verfügung zu stellen, die ermöglicht, auf einer Bedienkonsole gespeicherte Daten auf sichere und weniger umständliche Art zu übertragen.

Die Aufgabe wird erfindungsgemäß dadurch gelöst, dass die Bedienkonsole der Maschine eine RFID-Schnittstelle, insbesondere eine NFC-Schnittstelle, umfasst und derart ausgebildet ist, dass mittels über die RFID-Schnittstelle empfangener Authentifizierungsinformationen eine Authentifizierung eines Benutzerendgeräts vorgenommen wird, wobei die Bedienkonsole derart ausgebildet ist, dass sie bei erfolgreicher Authentifizierung eine Datenverbindung herstellt.

Die Datenverbindungen kann eine Drahtlosverbindung, beispielsweise WLAN oder Bluetooth, und/oder eine drahtgebundene Verbindung, beispielsweise LAN, umfassen.

Beispielsweise kann das Benutzerendgerät ein Handy, Tablet oder ähnliches mit einer RFID-Schnittstelle, insbesondere NFC-Schnittstelle, sein und die Authentifizierungsinformationen können auf diesem Endgerät gespeichert sein. Authentifizierungsinformationen können Informationen umfassen, die das Benutzerendgerät und/oder dessen Rechte identifizieren. Wenn das Benutzerendgerät nun innerhalb der Reichweite der Schnittstelle der Bedienkonsole ist, kann die Bedienkonsole die Authentifizierungsinformationen über die RFID-Schnittstelle auslesen und, bei gegebener Berechtigung, das Benutzerendgerät authentifizieren und bei erfolgreicher Authentifizierung eine Datenverbindung herstellen, mit der dann auf einfache Art eine Datenübertragung ermöglicht.. Der Benutzer selbst muss dazu nicht tätig werden, er muss nur das Benutzerendgerät bei sich haben und sich im Bereich der Bedienkonsole aufhalten, insbesondere in Reichweite der RFID-Antenne.

Die Bedienkonsole kann sich zum Beispiel automatisch in ein vorgegebenes Netzwerk einwählen (beispielsweise ein als sicher erachtetes WLAN), ein als sicher eingestuftes Partnergerät auswählen oder selbst ein geschütztes Netzwerk bereitstellen und nur als sicher eingestuften Geräten Zugriff auf das Netzwerk gewähren. Durch die oben genannte Ausbildung der Bedienkonsole wird also eine Zugriffsbeschränkung bzw. Zugriffskontrolle zumindest für das Herstellen der Datenverbindung ermöglicht, die jedoch den Benutzer nicht einschränkt, da keine Passworteingabe oder ähnliches erforderlich ist. Zudem ist ein Zugriff nur möglich, wenn der Benutzer sich in der Nähe des Bedienterminals befindet, so dass sichergestellt ist, dass sich kein Dritter in Abwesenheit des berechtigten Benutzers unerlaubten Zugriff verschafft. Weiterhin wird kein potenziell schädlicher Datenträger an die Bedienkonsole angeschlossen.

Weiterhin kann hier mit einem mehr oder weniger beliebigen Benutzerendgerät, beispielsweise einem Handy, das noch diverse andere Funktionen aufweisen kann, der Zugriff stattfinden. Es ist nicht nötig, spezifische Geräte bereitzustellen, da einfach ein vorhandenes Benutzerendgerät um die entsprechende Anwendung ergänzt werden kann. So kann das Benutzerendgerät auch für ganz verschieden Authentifizierungsanwendungen verwendet werden und ist nicht auf die Authentifizierung ausschließlich an der Bedienkonsole beschränkt.RFID-Schnittstellen basieren auf der RFID (Radio Frequency Identification)-Technologie, bei der Kommunikation durch elektromagnetische Induktion zwischen zwei (typischerweise Rahmen-)Antennen erfolgt. Die Schnittstelle umfasst dabei Hardware, beispielsweise die RFID-Antenne, sowie Software-Komponenten, um Daten über die Antenne zu kommunizieren.

Vorzugsweise wird hier ein HF-RFID (Hochfrequenz-RFID) verwendet, das einen Frequenzbereich von etwa 3 bis 30 MHz abdeckt, vorzugsweise zwischen 10 und 20 MHz, vorzugsweise zwischen 12 und 14 MHz. Vorzugsweise wird die Frequenz so gewählt, dass die Reichweite etwa bis zu 1 m ist. Der NFC (Near Field Communication)-Standard ist ein Beispiel für einen HF-RFID Standard, wobei auch andere Standards oder eine Industriestandard-unabhängige Anwendung möglich sind. Die NFC Technik arbeitet in einem Frequenzbereich von 13,56 MHz und hat eine Reichweite von etwa 10 cm. Der Vorteil des HF-RFID-Frequenzbereichs, insbesondere des NFC-Standards ist, dass die Reichweite benutzerfreundlich ist und zugleich den Zugriff Unbefugter sehr zuverlässig ausschließen kann.

Es ist auch denkbar, niedrigere Frequenzen, besonders aus dem LF-RFID (Niederfrequenz-RFID), das einen Frequenz-Bereich von 30 kHZ bis 300 kHz abdeckt und eine Reichweite von bis zu 10 cm aufweist, zu verwenden, wenn das bezogen auf die Reichweite, Störanfälligkeit und Datenrate wünschenswert erscheint. Frequenzen oberhalb des HF-RFID-Bereichs sind für Anwendungen geeignet, bei denen eine große Reichweite (bis zu über 10 m) erwünscht ist.

Vorzugsweise sind jedoch Frequenzen zu wählen, bei denen die Reichweite zwischen 5 cm und 1 m, insbesondere zwischen 5 cm und 60 cm, insbesondere zwischen 5 cm und 20 cm, insbesondere zwischen 10 cm und 15 cm, liegt. So kann das ungewollte Auslösen einer Authentifizierung und gegebenenfalls die Durchführung automatisch durchführbarer Funktionen des Bedienterminals vermieden werden.

Die Bedienkonsole kann derart ausgebildet sein, dass als Standardmodus ein passiver RFID-Betriebsmodus verwendet wird. Bei diesem Betriebsmodus wird nur eine der kommunizierenden RFID-Antennen, die aktive Antenne, mit Energie versorgt. Die andere Antenne verwendet Energie aus dem elektromagnetischen Feld, das durch die aktive Antenne erzeugt wird und antwortet, indem sie das Feld der aktiven Antenne moduliert.

Im vorliegenden Fall wird im passiven Betriebsmodus eine RFID-Antenne der Bedienkonsole mit Energie versorgt, die Antenne des Benutzerendgeräts jedoch nicht. Im diesem Fall übernimmt also beispielhaft die Bedienkonsole die Funktion des Lesers, der Informationen, beispielsweise die Authentifizierungsinformationen, von dem Benutzerendgerät, das dann die Funktion des RFID-Tags übernimmt, ausliest. Wenn keine Datenübertragung von der Bedienkonsole an das Benutzerendgerät erfolgen soll, ist dieser Betriebsmodus vorteilhaft, da er energiesparend ist und zudem nur die Bedienkonsole für die Kommunikation Energie verbraucht, nicht jedoch das Benutzerendgerät. Das ist vorteilhaft, da die Bedienkonsole typischerweise im Normalbetrieb mit Netzstrom betrieben wird, so dass der zusätzliche Energieverbrauch leichter zu verkraften ist als bei Akku-betriebenen Benutzerendgeräten.

Die Bedienkonsole kann derart ausgebildet sein, dass sie überprüft, beispielsweise in regelmäßigen Abständen, ob ein weiteres RFID-Gerät in Reichweite ist. Das hat den Vorteil, dass das mobile Benutzerendgerät nicht permanent nach passenden RFID-Partnergeräten suchen muss, was Energie kostet, oder der Benutzer die Suche aktivieren muss, was das Verfahren für den Benutzer umständlicher macht.

Es ist auch möglich, standardmäßig einen aktiven Betriebsmodus zu verwenden, in dem die Antennen beider RFID-Geräte mit Energie versorgt werden, also aktiv senden können, oder nach der Authentifizierung eines Benutzerendgerätes in einen aktiven Betriebsmodus umzuschalten. Dies ist vorteilhaft, wenn Datenaustausch in beide Richtungen stattfinden soll.

Die NFC-Technologie hat den besonderen Vorteil, dass der Standard bereits vorsieht, dass jedes NFC-Gerät sowohl eine aktive als auch eine passive Funktion übernehmen kann. Zudem sind viele Mobilgeräte, beispielsweise Handys oder Tablets bereits standardmäßig mit NFC-Schnittstellen ausgestattet.

Das Herstellen der Datenverbindung kann das Herstellen einer oder mehrerer Datenverbindungen mit einem oder mehreren anderen Geräten, insbesondere mit dem Benutzerendgerät, und/oder ein Bereitstellen eines, insbesondere zugriffsgeschützten, Netzwerks und/oder die Anmeldung in einem bzw. dem, insbesondere zugriffsgeschützten, Netzwerk umfasst. Das Netzwerk kann beispielsweise ein WLAN oder LAN sein.

Beispielsweise kann eine direkte Verbindung, zum Beispiel über Bluetooth zwischen der Bedienkonsole und einem ausgewählten anderen Gerät hergestellt werden, über die dann Daten an dieses Gerät gesendet werden. Alternativ oder zusätzlich kann, beispielsweise auf dem Betriebsgelände, ein zugriffsgeschütztes Netzwerk vorhanden sein, in dem sich die Bedienkonsole zum Herstellen der Datenverbindung anmelden kann. Über dieses Netzwerk können dann Daten beispielsweise ins Internet, auf einen Server, oder an ein anderes im Netzwerk angemeldetes Gerät gesendet werden.

Alternativ oder zusätzlich kann die Bedienkonsole derart ausgebildet sein, dass sie selbst ein Netzwerk, beispielsweise ein WLAN, zur Verfügung stellt und dass sie nach der Authentifizierung des Benutzerendgeräts über die RFID Schnittstelle das Benutzerendegerät in diesem Netzwerk automatisch anmeldet oder Anmeldeinformationen für dieses Netzwerk an das Benutzerendgerät überträgt. Das Benutzerendgerät kann sich dann mittels der Anmeldeinformationen in dem Netzwerk anmelden. Alternativ oder zusätzlich kann die Bedienkonsole derart ausgebildet sein, dass sie ein Netzwerk, beispielsweise WLAN, zur Verfügung stellt, das personalisiert ist, also beispielsweise nur für eine bestimmtes Benutzerendgerät zur Verfügung steht, und das aktiviert wird, wenn das jeweilige Benutzerendgerät authentifiziert wird. Das Benutzerendgerät kann dann beispielsweise automatisch in diesem Netzwerk angemeldet werden. Über das von der Bedienkonsole bereitgestellte Netzwerk können dann Daten an das Benutzerendgerät gesendet werden.

Die Bedienkonsole kann eine WLAN-Funktion und/oder Bluetooth-Funktion aufweisen und die Datenverbindung über Bluetooth bzw. WLAN hergestellt werden.

Wie oben erwähnt, ist es bisher üblich, Informationen über einen externen Datenträger, der an die Bedienkonsole angeschlossen wird, weiterzugeben. Dies ist jedoch sehr umständlich. WLAN-Funktionen und Bluetooth-Funktionen sind bislang unter anderem nicht verwendet worden, da ein permanentes Anmelden in WLAN-Netzwerken oder ein permanentes Sichtbarmachen als Bluetooth-Gerät ein Sicherheitsproblem darstellt. Zusammen mit der oben genannten Authentifizierung über die RFID-Schnittstelle können Daten einfach über verschiedene Schnittstellen, wie Bluetooth oder WLAN, übertragen werden, ohne dabei die oben genannten Risiken einzugehen.

Die Bedienkonsole kann derart ausgebildet sein, dass eine oder mehrere geschützte Funktionen der Bedienkonsole erst nach einer erfolgreichen Authentifizierung des Benutzerendgeräts über die RFID-Schnittstelle zugänglich sind. Insbesondere kann der Zugriff auf die geschützten Funktionen verweigert werden, wenn die Authentifizierung nicht erfolgreich ist, beispielsweise, weil auf dem Benutzerendgerät keine oder keine gültigen Authentifizierungsinformationen vorhanden sind.

Das heißt, dass ausgewählte Funktionen einer Zugriffsbeschränkung unterliegen. Diese Funktionen können dann nur ausgeführt werden, wenn ein Benutzerendgerät, das sich in der Reichweite der RFID-Schnittstelle der Bedienkonsole befindet, erfolgreich authentifiziert wird. Die Zugriffsbeschränkung betrifft jedoch nicht zwangsläufig alle Funktionen der Bedienkonsole. Beispielsweise kann die Zugriffsbeschränkung den Zugriff auf bestimmte Daten, das Verändern von Daten, das Kopieren von Daten, das Verschieben von Daten, das Anmelden in Netzwerken und/oder das Herstellen von Datenverbindungen betreffen, was unten im Detail erläutert wird. Auch Funktionen, die die Maschinensteuerung betreffen, können theoretisch zu den geschützten Funktionen gehören. Aus Sicherheitsgründen sollten jedoch manche die Maschinensteuerung betreffende Funktionen nicht zugriffsbeschränkt sein, damit schnell und unabhängig vom Benutzer auf Fehlverhalten der Maschine reagiert werden kann.

Eine, mehrere oder alle der geschützten Funktionen können bei erfolgreicher Authentifizierung des Benutzerendgeräts automatisch durchgeführt werden. Dies ist vorteilhaft, weil dann der Benutzer nicht zwingend umständliche Eingaben machen muss, beispielsweise Passworteingaben vornehmen oder in ein Menü navigieren und dort aussuchen, welche Schritte durchgeführt werden sollen. Insbesondere können alle Teilschritte einer geschützten Funktion automatisch durchgeführt werden, beispielsweise beim Verbinden mit einem Netzwerk das Aktivieren einer Netzwerks-Funktion, das Auswählen eines Netzwerks und das Anmelden mit einem Passwort in dem Netzwerk. Unter automatisch wird hier verstanden, dass ein Schritt (oder eine Funktion), wenn er ausgelöst wurde, ohne weitere Benutzereingaben ausgeführt wird. Ausgelöst werden kann der Schritt beispielsweise unmittelbar durch die Authentifizierung oder im Rahmen eines automatisch ablaufenden Prozesses, beispielsweise wenn ein vorangegangener Schritt abgeschlossen ist, oder durch eine Bestätigung durch den Benutzer.

Die oben genannten geschützten Funktionen können ein Aktivieren von Kommunikationsfunktionen, beispielsweise einer bzw. der WLAN-Funktion und/oder einer bzw. der Bluetooth-Funktion, und/oder das Herstellen der Datenverbindung umfassen.

Das heißt, dass für das Aktivieren von Kommunikationsfunktionen wie WLAN oder Bluetooth und/oder für das Herstellen von Datenverbindungen zu Geräten und Netzwerken eine Zugriffsbeschränkung vorliegen kann. Dies ist besonders wünschenswert, weil eine unkontrollierte Datenverbindung zu Netzwerken und Geräten ein Sicherheitsrisiko darstellen kann und daher nur von ausgewählten Benutzern aktiviert werden sollte.

Insbesondere können etwaige Daten, die zum Herstellen einer oder mehrerer Datenverbindungen mit dem bzw. den anderen Geräten und/oder die Anmeldung in einem zugriffsgeschützten Netzwerk verwendet werden, beispielsweise Sicherheitsschlüssel oder Passwörter, in einem Speicher der Bedienkonsole hinterlegt sein, aber der Zugriff auf diese Daten und/oder die Aktivierung der entsprechenden Kommunikationsfunktion können geschützte Funktionen sein. In diesem Fall kann das Herstellen einer oder mehrerer Datenverbindungen mit dem bzw. den anderen Geräten und/oder die Anmeldung in dem Netzwerk nur bei erfolgreicher Authentifizierung erfolgen, indem die jeweilige Funktion freigegeben wird.

Die Bedienkonsole kann alternativ oder zusätzlich derart ausgebildet sein, dass sie einen ersten Teil von über die RFID-Schnittstelle empfangenen Daten zur automatischen Anmeldung in einem bzw. dem zugriffsgeschützten Netzwerk verwendet und/oder dass sie über die RFID-Schnittstelle Anmeldedaten für ein zugriffsgeschütztes Netzwerk an das Benutzerendgerät sendet, insbesondere für ein bzw. das durch die Bedienkonsole bereitgestelltes zugriffsgeschütztes Netzwerk. Unter automatischer Anmeldung ist dabei zu verstehen, dass ein Benutzer die Daten, die für die Anmeldung nötig sind, nicht selbst eingeben muss, sondern die Bedienkonsole den ersten Teil der empfangenen Daten für den Anmeldevorgang übernimmt. Eine automatische Anmeldung schließt beispielsweise nicht aus, dass vom Benutzer eine Bestätigung, dass die Anmeldung durchgeführt werden soll, abgefragt wird.

Der erste Teil der empfangenen Daten kann Anmeldedaten für das zugriffsgeschützte Netzwerk, insbesondere einen Sicherheitsschlüssel oder ein Passwort, umfassen und die Bedienkonsole kann derart ausgebildet sein, dass bei einer Authentifizierung des Benutzerendgeräts ein automatisches Anmelden in dem zugriffsgeschützten Netzwerk unter Verwendung der Anmeldedaten erfolgt. Die Anmeldedaten können neben Sicherheitsschlüsseln, Passwörtern oder ähnlichem auch eine Identifizierung des zugriffsgeschützten Netzwerks umfassen, zu dem die Anmeldedaten gehören.

Das heißt, dass auf dem Benutzerendgerät, neben Authentifizierungsdaten zum Zugriff auf Funktionen der Bedienkonsole, auch Daten gespeichert sein können und an die Bedienkonsole (über die RFID-Schnittstelle) übertragen werden können, die einen Netzwerkzugriff ermöglichen, beispielsweise Sicherheitsschlüssel oder Passwörter. Dies hat den Vorteil, dass ein automatisches Verbinden mit dem Netzwerk erleichtert wird, weil der Benutzer selbst keine Netzwerkschlüssel oder Passwörter eingeben muss. Dabei ist das Verfahren aufgrund der begrenzten Reichweite des RFID (siehe oben) dennoch sehr sicher.

Die Bedienkonsole kann derart ausgebildet sein, dass sie prüft, ob über die RFID-Schnittstelle empfangene Daten Anmeldedaten für ein zugriffsgeschütztes Netzwerk umfassen, insbesondere durch das Überprüfen von Typ und/oder Format der Daten, und wenn dies der Fall ist, automatisch nach verfügbaren Netzwerken sucht, und sofern die Anmeldedaten gültige Anmeldedaten für das bzw. ein verfügbares zugriffsgeschütztes Netzwerk umfassen, automatisch eine Anmeldung in diesem Netzwerk durchführt.

Mit diesen Merkmalen wird ermöglicht, dass keine spezifischen Instruktionen an die Bedienkonsole vorliegen müssen, dass bzw. in welchem Netzwerk sie eine Anmeldung durchführt. Sie kann von selbst anhand der empfangenen Daten erkennen, dass diese Anmeldedaten enthalten, und kann dann diese Anmeldedaten verwenden, um einen Anmeldeversuch bei verfügbaren Netzwerken durchzuführen, ohne eine Abfrage an den Benutzer zu schicken, welches Netzwerk gewählt werden soll.

Die Bedienkonsole kann alternativ oder zusätzlich derart ausgebildet sein, dass sie (sofern möglich) anhand der Anmeldedaten bestimmt, für welches verfügbare zugriffsgeschützte Netzwerk die Anmeldedaten bestimmt sind, und nur in diesem zugriffsgeschützten Netzwerk eine Anmeldung initiiert oder dass sie in den verfügbaren Netzwerken nacheinander eine Anmeldung mit den empfangenen Anmeldedaten initiiert, bis die Anmeldung in einem der verfügbaren Netzwerke erfolgreich war.

Im ersten Fall kann, ohne Benutzerabfragen über das auszuwählende Netzwerk zu senden, unmittelbar das richtige Netzwerk gewählt werden und so unnötige Anmeldeversuche vermieden werden. Allerdings müssen dann Informationen an die Bedienkonsole geschickt werden, die das Netzwerk identifizieren. Im zweiten Fall sind ebenfalls keine Benutzerabfragen nötig und es müssen keine solchen Informationen, die das Netzwerk identifizieren, mitgeschickt werden. Es erfolgen zwar unter Umständen fehlgeschlagene Anmeldeversuche, aber wenn nur wenige oder gar nur ein Netzwerk in Reichweite sind, stellt dies in der Regel kein Problem dar.

Die Bedienkonsole kann derart ausgebildet sein, dass sie einen zweiten Teil über die RFID-Schnittstelle empfangener Daten zum Herstellen einer Datenverbindung mit einem weiteren Gerät verwendet.

Solche Verbindungen mit anderen Geräten können beispielsweise Bluetooth-Verbindungen sein. Insbesondere kann eine Verbindung mit dem Benutzerendgerät selbst hergestellt werden. Bluetooth ist vorteilhaft, weil die Datenübertragung über Bluetooth typischerweise höhere Datenübertragungsraten als NFC-Schnittstellen aufweist.

Die Bedienkonsole kann derart ausgebildet sein, dass sie bei Authentifizierung eines Benutzerendgeräts automatisch nach potenziellen Partnergeräten, mit denen das Herstellen der Datenverbindung möglich ist, sucht und/oder die Bedienkonsole für andere Geräte als potenzielles Partnergerät sichtbar macht. Die Bedienkonsole kann insbesondere derart ausgebildet sein, dass sie basierend auf den über die RFID-Schnittstelle empfangenen Daten automatisch ein oder mehrere Partnergeräte unter den potenziellen Partnergeräten auswählt und automatisch mit dem bzw. den ausgewählten Partnergeräten eine Datenverbindung herstellt, insbesondere ein automatisches Pairing mit dem bzw. den ausgewählten Partnergeräten über eine Bluetooth-Schnittstelle durchführt. Wenn die Bedienkonsole dauerhaft sichtbar ist, kann das unter Umständen ein Sicherheitsrisiko darstellen. Die automatische Durchführung der oben genannten Schritte ist vorteilhaft, da ein manuelles Pairing häufig umständlich ist, mehrere Versuche erfordert und Zeit in Anspruch nimmt.

Die Bedienkonsole kann derart ausgebildet sein, dass sie beim Herstellen von Datenverbindungen, insbesondere Bluetooth-Verbindungen, mehrere Suchen und/oder Verbindungsversuche vornimmt, wenn keines oder nicht das gewünschte Partnergerät sichtbar ist bzw. wenn der Verbindungsversuch fehlschlägt.

Die Bedienkonsole kann derart ausgebildet sein, dass der Benutzer vor der automatischen Durchführung eines, mehrerer oder aller der automatisch durchführbaren Schritte aufgefordert wird zu bestätigen, dass der jeweilige Schritt durchgeführt werden soll, und der jeweilige Schritt nur dann durchgeführt wird, wenn der Benutzer dies bestätigt, wobei die Bestätigung insbesondere an der Bedienkonsole oder an dem Benutzerendgerät erfolgt. Wenn die Eingabe über das Benutzerendgerät vorgenommen wird, muss dazu eine Datenverbindung vorliegen, die eine Kommunikation zwischen der Bedienkonsole und dem Benutzerendgerät in beide Richtungen ermöglicht.

Daraus ergibt sich der Vorteil, dass der Benutzer einen gewissen Einfluss auf die vorgenommenen Schritte hat, beispielsweise, ob eine Datenverbindung hergestellt wird, anstatt diese Schritte immer ohne Benutzereingriff bei der Authentifizierung vorzunehmen. Trotzdem muss der Benutzer die Schritte nicht manuell vornehmen, beispielsweise Anmeldedaten eingeben, weil die Schritte selbst immer noch automatisch erfolgen.

Die Aufforderung zur Bestätigung kann durch die Authentifizierung ausgelöst werden und auf der Bedienkonsole und/oder dem Benutzerendgerät angezeigt werden. Beispielsweise kann der Benutzer durch Betätigen eines Bedienelements, beispielsweise einer Taste, einer Maus oder einer Schaltfläche auf einem Touchdisplay, eine Bestätigung eingeben. Zusätzlich zum Bedienelement zur Bestätigung kann dem Benutzer auch ein Bedienelement, beispielsweise einer Taste oder eine Schaltfläche auf einem Touchdisplay, zum Ablehnen des bzw. der zur Verfügung stehenden Schritte angezeigt werden.

Die Bedienkonsole kann derart ausgebildet sein, dass der Benutzer vor der Durchführung eines mehrerer oder aller der automatisch durchführbaren Schritte auswählen kann, welcher bzw. welche der verfügbaren automatisch durchführbaren Schritte durchgeführt werden sollen, wobei die Auswahl insbesondere an der Bedienkonsole oder an dem Benutzerendgerät erfolgt.

Dazu kann auf dem Benutzerendgerät oder der Bedienkonsole eine Liste der verfügbaren automatisch durchführbaren Schritte angezeigt werden, von der er mit einem Bedienelement, beispielsweise einer Taste, einer Maus oder einer Schaltfläche auf einem Touchdisplay, die Auswahl vornehmen kann. Zusätzlich zum Bedienelement zur Auswahl von automatisch durchführbaren Schritten kann dem Benutzer auch ein Bedienelement, beispielsweise einer Taste oder eine Schaltfläche auf einem Touchdisplay, zum Ablehnen aller vorgeschlagenen Schritte angezeigt werden.

Wenn der Benutzer einen automatisch durchführbaren Schritt bestätigt oder auswählt kann dies die Durchführung des Schrittes auslösen, der dann automatisch durchgeführt wird. Im Falle der Auswahl eines oder mehrerer Schritte kann noch ein Zwischenschritt zur Bestätigung der Auswahl erfolgen und erst nach dieser Bestätigung die automatische Durchführung des Schrittes ausgelöst werden.

Nachdem ein automatisch durchführbarer Schritt ausgelöst wurde, beispielsweise durch die Authentifizierung selbst oder durch die Auswahl und/oder Bestätigung durch den Benutzer, muss der Benutzer selbst (im Normalbetrieb) nicht mehr eingreifen, der Schritt wird also automatisch durchgeführt. Es ist optional möglich, dass der Benutzer die Möglichkeit hat, mit einem Bedienelement, beispielsweise einer Taste, einer Maus oder einer Schaltfläche auf einem Touchdisplay, den Schritt während der automatischen Durchführung abzubrechen oder zu unterbrechen.

Die Erfindung betrifft auch ein Verfahren zum Betreiben und/oder Warten einer Maschine zur Verarbeitung von Lebensmitteln und Verpackungsprodukten, umfassend Steuerelemente zum Steuern von Komponenten der Maschine und eine Bedienkonsole zum Bedienen der Maschine mittels der Steuerelemente, wobei die Bedienkonsole der Maschine eine RFID-Schnittstelle, insbesondere eine NFC-Schnittstelle, umfasst. Bei Annäherung eines Benutzerendgeräts an die RFID-Schnittstelle werden von dem Benutzerendgerät über die RFID-Schnittstelle Authentifizierungsinformationen an die Bedienkonsole übertragen und mittels der Authentifizierungsinformationen wird eine Authentifizierung des Benutzerendgeräts vorgenommen. Die Bedienkonsole stellt bei erfolgreicher Authentifizierung automatisch eine Datenverbindung, beispielsweise über Bluetooth oder WLAN, her und überträgt über die Datenverbindung Informationen über die Maschine, insbesondere Informationen zur Fehlerdiagnose oder Maschinenwartung, wie beispielsweise Zustandsdaten der Maschine und/oder eine Auflistung verwendeter Betriebsparameter und/oder eine Auflistung von im Betrieb detektierten Messwerten, an ein Netzwerk und/oder an ausgewählte Partnergeräte, insbesondere an das Benutzerendgerät.

Darunter, dass Daten an ein Netzwerk gesendet werden, ist insbesondere zu verstehen, dass Daten an ein oder mehrere andere mit dem Netzwerk verbundene Geräte gesendet werden.

Wie im Zusammenhang mit der Vorrichtung beschrieben, kann das automatische Herstellen der Datenverbindung unmittelbar und ohne Benutzereingriff durch die erfolgreiche Authentifizierung ausgelöst werden, es kann jedoch vor dem automatischen Herstellen der Datenverbindung auch eine Benutzerabfrage erfolgen. Bevor automatisch eine Datenverbindung hergestellt wird, kann beispielsweise vom Benutzer eine Bestätigung und/oder die Auswahl von durchzuführenden Funktionen abgefragt werden. Die Bestätigung und/oder Auswahl kann vom Benutzer an der Bedienkonsole oder an dem Benutzerendgerät vorgenommen werden. Vorzugsweise wird sie jedoch an der Bedienkonsole vorgenommen, weil dann kein zusätzlicher Datenaustausch zwischen der Bedienkonsole und dem Benutzerendgerät nötig ist. Da sich der Benutzer ohnehin für die RFID-Kommunikation in der Nähe der Bedienkonsole aufhält, stellt dies keine Einschränkung dar.

Ähnliches gilt auch für die Datenübertragung. Das heißt, es kann eine Funktion bereit gestellt werden, bei der der Benutzer mittels der Bedienkonsole bestätigt, dass Informationen über die Maschine mittels der Datenverbindung übertragen werden sollen, oder auswählt, welche Informationen über die Maschine mittels der Datenverbindung übertragen werden sollen.

Die Authentifizierung kann den Zugriff auf bereits auf der Bedienkonsole vorhandene Anmeldedaten und/oder Verbindungsdaten und/oder die Funktion zum automatischen Herstellen der Datenverbindung basierend auf bereits auf der Bedienkonsole vorhandenen Anmeldedaten und/oder Verbindungsdaten freigeben. Alternativ oder zusätzlich kann die Bedienkonsole neben den Authentifizierungsinformationen auch Anmeldedaten und/oder Verbindungsdaten über die RFID-Schnittstelle von dem Benutzerendgerät erhalten und basierend auf diesen Daten nach der Authentifizierung die Datenverbindung automatisch herstellen. Verschiedene Möglichkeiten hierzu wurden bereits im Zusammenhang mit der Vorrichtung im Detail erläutert und treffen hier ebenfalls zu.

Alternativ oder zusätzlich kann die Bedienkonsole selbst ein Netzwerk, beispielsweise ein WLAN, zur Verfügung stellen und nach der Authentifizierung des Benutzerendgeräts das Benutzerendegerät in diesem Netzwerk automatisch anmelden oder über die RFID Schnittstelle Anmeldeinformationen für dieses Netzwerk an das Benutzerendgerät übertragen. Das Benutzerendgerät kann sich dann mittels der Anmeldeinformationen in dem Netzwerk anmelden.

Alternativ oder zusätzlich kann die Bedienkonsole ein Netzwerk, beispielsweise WLAN, zur Verfügung stellen, das personalisiert ist, also beispielsweise nur für eine bestimmtes Benutzerendgerät zur Verfügung steht, und das aktiviert wird, wenn das jeweilige Benutzerendgerät authentifiziert wird. Das Benutzerendgerät kann dann beispielsweise unmittelbar, ohne dass zusätzliche Anmeldeinformationen übertragen werden müssen, in dem personalisierten Netzwerk anmelden. Über das von der Bedienkonsole bereitgestellte Netzwerk können dann Daten an das Benutzerendgerät gesendet werden.

Es sei angemerkt, dass im oben im Zusammenhang mit der Vorrichtung erläuterten passiven Betriebsmodus die Authentifizierungsinformationen und gegebenenfalls die Anmeldedaten und/oder Verbindungsdaten ohne aktive Beteiligung des Benutzerendgeräts über die RFID-Schnittstelle der Bedienkonsole ausgelesen werden können.

Die im Zusammenhang mit der Maschine beschriebenen Merkmale sind auf das Verfahren ebenfalls anzuwenden und die dort genannten Vorteile gelten analog für entsprechende Verfahrensschritte.

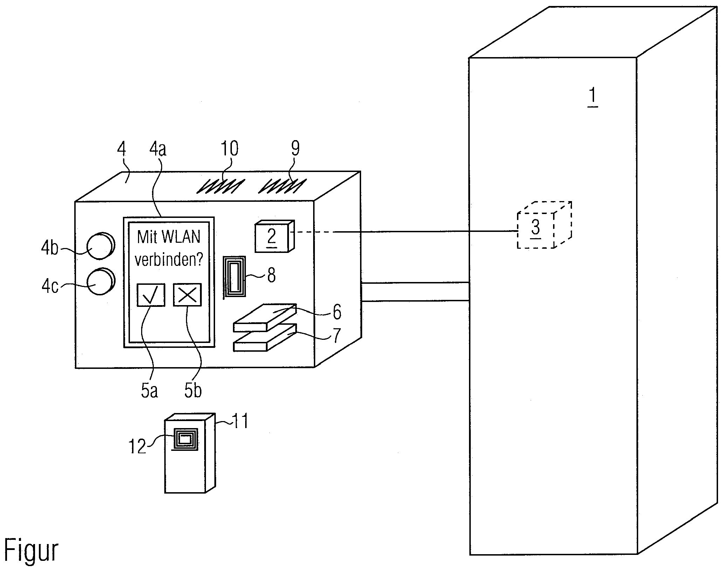

Weitere Merkmale und Vorteile werden nachfolgend anhand der Figur erläutert, die eine schematische, nicht maßstabsgetreue Darstellung eines Ausführungsbeispiels zeigt.

Die Figur zeigt insbesondere eine Maschine 1 zur Verarbeitung von Lebensmitteln und Verpackungsprodukten, umfassend Steuerelemente 2 zum Steuern von hier nur schematisch dargestellten Komponenten 3. Die Steuerelemente können beispielsweise Recheneinheiten sein, die zum Steuern und/oder Regeln der Komponenten ausgebildet sind. Diese Recheneinheiten können integral mit der Bedienkonsole ausgebildet sein. Die Komponenten können beispielsweise Elektromotoren, Ansteuerbare Ventile oder ähnliches umfassen.

Weiterhin ist hier die Bedienkonsole 4 zum Bedienen der Maschine mittels der Steuerelemente gezeigt. Die Bedienkonsole umfasst ein Anzeigeelement und mindestens ein Eingabeelement. In diesem Beispiel ist das Anzeigeelement integral mit einem Eingabeelement in Form eines Touchdisplays 4a ausgebildet. Zwei zusätzliche Eingabeelemente sind in Form von Tasten 4b und 4c ausgebildet. Es ist selbstverständlich, dass eine andere Anzahl an Eingabeelementen vorliegen kann und dass auch nur eine Art von Eingabeelementen, beispielsweise nur ein Touchdisplay oder nur Tasten, vorliegen kann.

Die Tasten sind Bedienelemente für die Bedienkonsole. In der Figur sind auf dem Touchdisplay außerdem eingeblendete Schaltflächen 5a und 5b gezeigt, die ebenfalls Bedienelemente für die Bedienkonsole sind. Diese Schaltflächen können im Betrieb permanent oder nur in bestimmten Situationen angezeigt werden, beispielsweise wenn der Benutzer zu einer Eingabe aufgefordert wird, beispielsweise einer Auswahl oder Bestätigung.

Die Bedienkonsole umfasst zudem, hier nur schematisch angedeutet, eine Recheneinheit 6, mit der die Funktionen der Bedienkonsole umgesetzt werden, und einen Speicher 7, in dem beispielsweise Informationen über die Maschine, insbesondere Informationen zur Fehlerdiagnose oder Maschinenwartung, wie beispielsweise Zustandsdaten der Maschine und/oder eine Auflistung verwendeter Betriebsparameter und/oder eine Auflistung von im Betrieb detektierten Messwerten.

Die Bedienkonsole umfasst auch eine RFID-Antenne 8, hier beispielhaft eine NFC-Antenne. Zudem umfasst die Bedienkonsole eine Bluetooth-Antenne 9 und eine WLAN-Antenne 10, die nur schematisch angedeutet sind, wobei es sich um beliebige bekannte Bleutooth- bzw. WLAN-Antennen handeln kann. Die Bedienkonsole kann aber auch nur die RFID-Antenne und keine Bluetooth- oder WLAN-Antenne umfassen oder die RFID-Antenne und nur die Bluetooth- oder die WLAN-Antenne umfassen. Es sei angemerkt, dass Bluetooth-Antennen typischerweise im Bereich von UHF-Radiowellen arbeiten und WLAN-Antennen im Bereich von UHF-Radiowellen oder SHF-Radiowellen arbeiten, also in anderen Frequenzbereichen als die NFC-Antenne.

Die Antennen bilden jeweils Teil einer entsprechenden Schnittstelle, also einer RFID-Schnittstelle (in diesem Beispiel eine NFC-Schnittstelle), Bluetooth-Schnittstelle bzw. WLAN-Schnittstelle, wobei die Schnittstelle, wie oben beschrieben noch die entsprechenden Softwarekomponenten umfasst.

Die RFID-Antenne ist mit einer Stromversorgung verbunden und erzeugt bei Zufuhr von Strom elektromagnetische Felder. Mittels der RFID-Antenne kann die Bedienkonsole über elektromagnetische Induktion mit einer anderen RFID-Antenne, die sich innerhalb der Reichweite der RFID-Antenne der Bedienkonsole befindet, kommunizieren. Wenn kein Strom zugeführt wird, kann sie von einer anderen aktiven RFID-Antenne über von dieser erzeugte elektromagnetische Felder angesprochen werden.

In diesem Beispiel handelt es sich um eine NFC-Schnittstelle mit einer NFC-Antenne. NFC-Antennen arbeiten in einem Frequenzbereich von 13,56 MHz und haben eine Reichweite von etwa 10 cm. Außerdem sind NFC-Schnittstellen so ausgelegt, dass sie sowohl die aktive oder die passive Rolle bei der Kommunikation mit einer anderen NFC-Schnittstelle einnehmen können. Der Vorteil von NFC-Schnittstellen ist, dass diese standardisiert sind und somit Kompatibilität von Partnergeräten leichter sichergestellt werden kann und sie oft schon in Mobilgeräten vorhanden sind. Außerdem haben sie eine geeignete Reichweite für die vorliegende Anwendung. Alternativ können jedoch auch andere RFID-Antennen verwendet werden, insbesondere mit anderen Frequenzbereichen oder Reichweiten.

In der Figur ist auch ein Benutzerendgerät 11 gezeigt, das in diesem Beispiel nicht Teil der erfindungsgemäßen Maschine ist. Das Benutzerendgerät ist hier ein mobiles Kommunikationsgerät, beispielsweise ein Handy oder ein Tablet, und umfasst eine RIFD-Schnittstelle, die ein passendes Gegenstück zu der RFID-Schnittstelle der Maschine darstellt, in diesem Fall also ebenfalls eine NFC-Schnittstelle mit einer NFC-Antenne 12.

Die Bedienkonsole ist derart ausgebildet, dass sie die folgenden Funktionen umfasst: Suchen nach NFC-Antennen in ihrer Reichweite, Auslesen bzw. Empfangen und Verwerten von Daten über NFC-Antennen in Reichweite der NFC-Schnittstelle der Bedienkonsole über die NFC-Schnittstelle, Authentifizieren von Benutzerendgeräten von denen über die NFC-Schnittstelle gültige Authentifizierungsinformationen empfangen wurden, Herstellen von Verbindungen mit Netzwerken und/oder anderen Geräten über die WLAN- und/oder Bluetooth-Schnittstellen, Freigeben und Sperren geschützter Funktionen, Zugreifen auf und Senden von Daten, die im Speicher der Bedienkonsole gespeichert sind.

Alternativ oder zusätzlich kann die Bedienkonsole derart ausgebildet sein, dass sie selbst ein Netzwerk, beispielsweise ein WLAN, zur Verfügung stellt und dass sie nach der Authentifizierung des Benutzerendgeräts das Benutzerendgerät automatisch in dem Netzwerk anmeldet oder über die RFID Schnittstelle Anmeldeinformationen für dieses Netzwerk an das Benutzerendgerät überträgt. Das Benutzerendgerät kann sich dann mittels der Anmeldeinformationen in dem Netzwerk anmelden. Alternativ oder zusätzlich kann die Bedienkonsole derart ausgebildet sein, dass sie ein Netzwerk, beispielsweise WLAN, zur Verfügung stellt, das personalisiert ist, also beispielsweise nur für eine bestimmtes Benutzerendgerät zur Verfügung steht, und das aktiviert wird, wenn das jeweilige Benutzerendgerät authentifiziert wird.

Zusätzlich kann optional eine Funktion vorgesehen sein, nach erfolgreicher Authentifizierung auf dem Anzeigeelement der Bedienkonsole eine Aufforderung an den Benutzer anzuzeigen, beispielsweise die Durchführung weiterer Schritte zu bestätigen oder eine Auswahl und möglicherweise Bestätigung zur Verfügung stehender Schritte vorzunehmen, und gemäß einer entsprechenden Benutzereingabe über eines oder mehrere der Bedienelemente vorzugehen, beispielsweise bestimmte Schritte automatisch durchzuführen.

Im Folgenden werden erfindungsgemäße Verfahren erläutert, die beispielsweise mit der oben beschriebenen oder einer anderen erfindungsgemäßen Maschine durchgeführt werden können.

Im ersten Beispiel handelt es sich um ein Verfahren, bei dem durch die erfolgreiche Authentifizierung eines Benutzerendgeräts automatisch geschützte Funktionen der Bedienkonsole freigegeben werden. Hier wird zunächst ein passiver Betriebsmodus beschrieben, in dem die Bedienkonsole die aktive Rolle und das Benutzerendgerät die passive Rolle übernimmt.

Die Bedienkonsole sucht mittels ihrer NFC-Antenne nach anderen NFC-Antennen in ihrer Reichweite. Dies kann zum Beispiel periodisch erfolgen. Wenn ein Benutzerendgerät mit einer NFC-Antenne in die Reichweite der NFC-Antenne der Bedienkonsole kommt, kommuniziert sie mit dieser Antenne. Im passiven Betriebsmodus wird dabei die Antenne des Benutzerendgeräts nicht mit Strom versorgt. Die NFC-Antenne der Bedienkonsole liest über die NFC-Antenne des Benutzerendgeräts Informationen aus. Daher wird im hier beschriebenen passiven Betriebsmodus die Bedienkonsole auch als Leser bezeichnet. Diese Informationen umfassen Authentifizierungsinformationen, die das Benutzerendgerät und/oder dessen Zugriffsrechte identifizieren. Anschließend bestimmt die Bedienkonsole, ob die Authentifizierungsinformationen gültig sind, also den Anforderungen für eine erfolgreiche Authentifizierung genügen. Beispielsweise kann im einfachsten Fall eine Liste zugelassener IDs in der Bedienkonsole hinterlegt sein und über die NFC-Schnittstelle die ID des Benutzerendgeräts ausgelesen werden. Die Authentifizierung kann dann erfolgreich sein, wenn diese ID in der Liste der zugelassenen IDs vorhanden ist. Es sind auch diverse andere Authentifizierungsverfahren möglich.

Wenn die Authentifizierung nicht erfolgreich ist, werden die geschützten Funktionen nicht freigegeben. Optional kann dem Benutzer mittels der Bedienkonsole ein entsprechender Hinweis, beispielsweise optisch oder akustisch, gegeben werden.

Wenn die Authentifizierung erfolgreich ist, werden die geschützten Funktionen unmittelbar freigegeben, ohne dass der Benutzer eingreifen muss. Beispielsweise kann eine WLAN-Funktion oder Bluetooth-Funktion oder der Zugriff auf bestimmte Daten freigegeben werden.

Das Verfahren kann insbesondere umfassen, dass eine Datenverbindung hergestellt wird, beispielsweise über die freigegebene WLAN- oder Bluetooth-Funktion. Im vorliegenden Beispiel erfolgt dies, ohne dass der Benutzer dies auswählen oder bestätigen muss.

Dass eine Datenverbindung über die WLAN-Funktion hergestellt wird, umfasst hier, dass die WLAN-Antenne aktiviert wird, dass die Bedienkonsole nach verfügbaren Netzwerken sucht, und dass Anmeldedaten für das Netzwerk verwendet werden, um die Bedienkonsole in dem Netzwerk anzumelden. Diese Anmeldedaten können auf der Bedienkonsole hinterlegt sein oder ganz oder teilweise über die NFC-Schnittstelle, zusätzlich zu den Authentifizierungsinformationen, empfangen werden. Beispielsweise können über die NFC-Schnittstelle Daten empfangen werden, die spezifizieren, mit welchem Netzwerk eine Verbindung hergestellt werden soll. Alternativ oder zusätzlich können auch Netzwerkschlüssel oder Passwörter auf dem Benutzerendgerät hinterlegt sein und über die NFC-Schnittstelle ausgelesen werden. Letzteres bietet einen zusätzlichen Schutz, da diese Daten dann nicht auf der Bedienkonsole hinterlegt sein müssen und es nicht einfach möglich ist, sich über die Bedienkonsole unberechtigten Zugriff auf die Anmeldedaten zu verschaffen.

Alternativ oder zusätzlich kann die Bedienkonsole selbst ein Netzwerk, beispielsweise ein WLAN, zur Verfügung stellen und nach der Authentifizierung des Benutzerendgeräts das Benutzerendgerät automatisch in dem Netzwerk anmelden oder über die RFID Schnittstelle Anmeldeinformationen für dieses Netzwerk an das Benutzerendgerät übertragen. Das Benutzerendgerät kann sich dann mittels der Anmeldeinformationen in dem Netzwerk anmelden. Alternativ oder zusätzlich kann die Bedienkonsole ein Netzwerk, beispielsweise WLAN, zur Verfügung stellen, das personalisiert ist, also beispielsweise nur für eine bestimmtes Benutzerendgerät zur Verfügung steht, und das aktiviert wird, wenn das jeweilige Benutzerendgerät authentifiziert wird. Das Benutzerendgerät kann dann beispielsweise unmittelbar, ohne dass zusätzliche Anmeldeinformationen übertragen werden müssen, in dem personalisierten Netzwerk anmelden.

Das gesamte Verfahren zum Herstellen der Datenverbindung und die dazugehörigen Teilschritte erfolgen automatisch. Das heißt, der Benutzer muss keinerlei Eingaben vornehmen, um die Bedienkonsole im Netzwerk anzumelden. Er muss beispielsweise weder das WLAN auswählen noch die Anmeldedaten eingeben.

Alternativ ist auch möglich, dass zwar die einzelnen Teilschritte automatisch ablaufen, dass aber beispielsweise vor manchen Teilschritten noch Benutzerabfragen erfolgen. Beispielsweise könnte die Bedienkonsole nach dem Auswählen des WLANs und wenn sie die Verfügbarkeit der entsprechenden Anmeldedaten geprüft hat, vom Benutzer eine Bestätigung abfragen, dass tatsächlich eine Verbindung hergestellt werden soll. Alternativ oder zusätzlich könnte die Bedienkonsole dem Benutzer eine Auswahl an zur Verfügung stehenden Netzwerken anzeigen und zur Auswahl eines Netzwerks auffordern.

Das Herstellen einer Bluetooth-Verbindung umfasst typischerweise, dass die Bluetooth-Antenne aktiviert wird, dass die Bedienkonsole als verfügbares Bluetooth-Gerät sichtbar gemacht wird, dass nach verfügbaren Partnergeräten gesucht wird, dass ein verfügbares Partnergerät ausgewählt wird und dass zwischen den beiden Geräten eine Verbindung hergestellt wird. Alle diese Schritte können, ähnlich wie bei der Anmeldung im WLAN-Netzwerk, ohne Benutzereingriff erfolgen. Alternativ kann der Benutzer beispielsweise aufgefordert werden zu bestätigen, dass die Bedienkonsole als Bluetooth-Gerät sichtbar wird und ob bzw. mit welchem Gerät sie sich verbinden soll.

Sofern solche Abfragen vorgesehen sind, erfolgen sie vorzugsweise über ein Anzeigeelement (beispielsweise das oben beschriebene Touchdisplay) und der Benutzer nimmt das Bestätigen oder Auswählen über die Eingabeelemente vor. Beispielsweise können auf dem Touchdisplay, wie oben erläutert, Schaltflächen angezeigt werden, mit denen der Benutzer den Vorgang bestätigen oder abbrechen kann.

Es sei angemerkt, dass manche der oben beschriebenen Schritte zum Herstellen einer Verbindung möglicherweise nicht von einer erfolgreichen Authentifizierung abhängen. Beispielsweise könnten eine WLAN-Antenne oder Bluetooth-Antenne standardmäßig aktiviert sein und nur das tatsächliche Anmelden in dem WLAN oder Verbinden mit dem Bluetooth-Partnergerät erst durch die Authentifizierung freigegeben werden.

Wie oben beschrieben kann auch die Funktion, auf bestimmte Daten zuzugreifen, geschützt sein. Insbesondere kann es sich hierbei um Informationen über die Maschine, insbesondere Informationen zur Fehlerdiagnose oder Maschinenwartung, wie beispielsweise Zustandsdaten der Maschine und/oder eine Auflistung verwendeter Betriebsparameter und/oder eine Auflistung von im Betrieb detektierten Messwerten, handeln, die auf der Bedienkonsole gespeichert sind.

Eine bevorzugte Weiterbildung ist ein Prozess, bei dem nach erfolgreicher Authentifizierung entweder automatisch eine Datenverbindung mit einem WLAN oder mit einem Bluetooth Partnergerät hergestellt wird, insbesondere dem authentifizierten Benutzerendgerät, dass automatisch auf die oben beschriebenen Daten zugegriffen wird und dass diese an ein ausgewähltes, ebenfalls im WLAN angemeldetes Gerät oder an das verbundene Bluetooth-Partnergerät gesendet werden. Besonders bevorzugt ist, dass die einzelnen Schritte und auch der gesamte Prozess automatisch ablaufen, also durch die erfolgreiche Authentifizierung der Prozess ausgelöst wird und vollständig ohne Benutzereingabe abläuft.

Es gibt verschiedene Möglichkeiten, wie die geschützten Funktionen nach der Freigabe wieder gesperrt werden. Es ist möglich, dass sämtliche geschützte Funktionen unmittelbar gesperrt werden, sobald das Benutzerendgerät sich nicht mehr im Bereich der NFC-Antenne der Bedienkonsole befindet. Dies ist zwar besonders sicher, hat aber auch zur Folge, dass unter Umständen laufende Prozesse versehentlich abgebrochen werden. Außerdem muss der Benutzer dann in unmittelbarer Nähe der Bedienkonsole bleiben, bis die gewünschten Schritte abgeschlossen sind. Daher ist es vorzuziehen, dass nach einer vorgegebenen Zeitdauer, nach Beendigung eines vorgegebenen Prozesses, beispielsweise der oben beschriebenen Datenübertragung, oder durch eine Benutzereingabe, beispielsweise an der Bedienkonsole, alle geschützten Funktionen wieder gesperrt werden. Es ist auch möglich, dass das Sperren verschiedener geschützter Funktionen unterschiedlich gehandhabt wird.

In einem zweiten Beispiel kann es sich, statt wie oben beschrieben, um einen aktiven Betriebsmodus handeln. Dann können das Benutzerendgerät und die Bedienkonsole über die NFC-Schnittstelle in beide Richtungen Daten austauschen. Beispielsweise kann die Bedienkonsole dem Benutzerendgerät signalisieren, dass die Authentifizierung erfolgreich war und gegebenenfalls kann wiederum das Benutzerendgerät dann zusätzliche Daten, beispielsweise Anmeldedaten für ein Netzwerk und/oder auch Anweisungen, welche Schritte die Bedienkonsole durchführen soll, an die Bedienkonsole übertragen. Die im Zusammenhang mit dem passiven Modus beschriebenen Merkmale können auch auf den aktiven Modus angewandt werden.

Es ist möglich, dass der passive Betriebsmodus der Standardmodus ist und auf den aktiven Modus umgeschaltet wird, wenn das Benutzerendgerät dies signalisiert.

Es versteht sich, dass in den zuvor beschriebenen Ausführungsbeispielen genannte Merkmale nicht auf diese speziellen Kombinationen beschränkt sind und auch in beliebigen anderen Kombinationen möglich sind.

## Patentansprüche

1. Maschine (1) zur Verarbeitung von Lebensmitteln und Verpackungsprodukten, umfassend Steuerelemente (2) zum Steuern von Komponenten (3) der Maschine (1) und eine Bedienkonsole (4) zum Bedienen der Maschine (1) mittels der Steuerelemente (2),
**dadurch gekennzeichnet, dass**
die Bedienkonsole (4) der Maschine (1) eine RFID-Schnittstelle in Form einer NFC-Schnittstelle umfasst und derart ausgebildet ist, dass mittels über die RFID-Schnittstelle empfangener Authentifizierungsinformationen eine Authentifizierung eines Benutzerendgeräts (11) vorgenommen wird, wobei die Bedienkonsole (4) derart ausgebildet ist, dass sie bei erfolgreicher Authentifizierung eine Datenverbindung herstellt,
wobei die Bedienkonsole (4) eine WLAN-Funktion und/oder Bluetooth-Funktion aufweist und die Datenverbindung über Bluetooth bzw. WLAN hergestellt wird, und
wobei das Herstellen der Datenverbindung das Herstellen einer oder mehrerer Datenverbindungen mit einem oder mehreren anderen Geräten, insbesondere mit dem Benutzerendgerät, und/oder ein Bereitstellen eines, insbesondere zugriffsgeschützten, Netzwerks und/oder die Anmeldung in einem bzw. dem, insbesondere zugriffsgeschützten, Netzwerk umfasst.

2. Maschine (1) nach Anspruch 1, wobei die Bedienkonsole (4) derart ausgebildet ist, dass eine oder mehrere geschützte Funktionen der Bedienkonsole (4) erst nach einer erfolgreichen Authentifizierung des Benutzerendgeräts (11) über die RFID-Schnittstelle zugänglich sind, wobei insbesondere eine, mehrere oder alle der geschützten Funktionen bei erfolgreicher Authentifizierung des Benutzerendgeräts (11) automatisch durchgeführt werden.

3. Maschine (1) nach Anspruch 2, wobei die geschützten Funktionen ein Aktivieren einer bzw. der WLAN-Funktion und/oder einer bzw. der Bluetooth-Funktion und/oder das Herstellen der Datenverbindung umfassen.

4. Maschine (1) nach einem der Ansprüche 1 bis 3, wobei die Bedienkonsole (4) derart ausgebildet ist, dass sie einen ersten Teil von über die RFID-Schnittstelle empfangenen Daten zur automatischen Anmeldung in einem zugriffsgeschützten Netzwerk verwendet und/oder dass sie über die RFID-Schnittstelle Anmeldedaten für ein zugriffsgeschütztes Netzwerk an das Benutzerendgerät sendet, insbesondere für ein bzw. das durch die Bedienkonsole bereitgestelltes zugriffsgeschütztes Netzwerk.

5. Maschine (1) nach Anspruch 4, wobei der erste Teil der empfangenen Daten Anmeldedaten für das zugriffsgeschützte Netzwerk, insbesondere einen Sicherheitsschlüssel oder ein Passwort, umfasst und wobei die Bedienkonsole (4) derart ausgebildet ist, dass bei einer Authentifizierung des Benutzerendgeräts (11) ein automatisches Anmelden in dem zugriffsgeschützten Netzwerk unter Verwendung der Anmeldedaten erfolgt.

6. Maschine (1) nach einem der Ansprüche 1 bis 5, wobei die Bedienkonsole (4) derart ausgebildet ist, dass sie prüft, ob über die RFID-Schnittstelle empfangene Daten Anmeldedaten für ein geschütztes Netzwerk umfassen, insbesondere durch das Überprüfen von Typ und/oder Format der Daten, und wenn dies der Fall ist automatisch nach verfügbaren Netzwerken sucht, und sofern die Anmeldeten gültige Anmeldedaten für das bzw. ein verfügbares, zugriffsgeschütztes Netzwerk sind, automatisch eine Anmeldung in diesem Netzwerk durchführt.

7. Maschine (1) nach Anspruch 6, wobei die Bedienkonsole (4) derart ausgebildet ist, dass sie anhand der Anmeldedaten bestimmt, für welches verfügbare zugriffsgeschützte Netzwerk die Anmeldedaten bestimmt sind, und nur in diesem zugriffsgeschützten Netzwerk eine Anmeldung initiiert oder dass sie in den verfügbaren Netzwerken nacheinander eine Anmeldung mit den empfangenen Anmeldedaten initiiert, bis die Anmeldung in einem der verfügbaren Netzwerke erfolgreich war.

8. Maschine (1) nach einem der Ansprüche 1 bis 7, wobei die Bedienkonsole (4) derart ausgebildet ist, dass sie einen zweiten Teil über die RFID-Schnittstelle empfangener Daten zum Herstellen einer Datenverbindung mit einem weiteren Gerät verwendet.

9. Maschine (1) nach Anspruch 8, wobei die Bedienkonsole (4) derart ausgebildet ist, dass sie bei Authentifizierung eines Benutzerendgeräts (11) automatisch nach potenziellen Partnergeräten, mit denen das Herstellen der Datenverbindung möglich ist, sucht und/oder die Bedienkonsole (4) für andere Geräte als potenzielles Partnergerät sichtbar macht.

10. Maschine (1) nach Anspruch 9, wobei die Bedienkonsole (4) derart ausgebildet ist, dass sie basierend auf den über die RFID-Schnittstelle empfangenen Daten automatisch ein oder mehrere Partnergeräte unter den potenziellen Partnergeräten auswählt und automatisch mit dem bzw. den ausgewählten Partnergeräten eine Datenverbindung herstellt, insbesondere ein automatisches Pairing mit dem bzw. den ausgewählten Partnergeräten über eine Bluetooth-Schnittstelle durchführt.

11. Maschine (1) nach einem der vorangegangenen Ansprüche, wobei die Bedienkonsole (4) derart ausgebildet ist, dass der Benutzer vor der automatischen Durchführung eines, mehrerer oder aller der automatisch durchführbaren Schritte aufgefordert wird, zu bestätigen, dass der jeweilige Schritt durchgeführt werden soll, und der jeweilige Schritt nur dann durchgeführt wird, wenn der Benutzer dies bestätigt, wobei die Bestätigung insbesondere an der Bedienkonsole (4) oder an dem Benutzerendgerät (11) erfolgt.

12. Maschine (1) nach einem der vorangegangenen Ansprüche, wobei die Bedienkonsole (4) derart ausgebildet ist, dass der Benutzer vor der Durchführung eines mehrerer oder aller der automatisch durchführbaren Schritte auswählen kann, welcher bzw. welche der verfügbaren automatisch durchführbaren Schritte durchgeführt werden sollen, wobei die Auswahl insbesondere an der Bedienkonsole (4) oder an dem Benutzerendgerät (11) erfolgt.

13. Verfahren zum Betreiben und Warten einer Maschine (1) zur Verarbeitung von Lebensmitteln und Verpackungsprodukten, umfassend Steuerelemente (2) zum Steuern von Komponenten (3) der Maschine (1) und eine Bedienkonsole (4) zum Bedienen der Maschine (1) mittels der Steuerelemente (2),
**dadurch gekennzeichnet, dass**
die Bedienkonsole (4) der Maschine (1) eine RFID-Schnittstelle in Form einer NFC-Schnittstelle umfasst,
bei Annäherung eines Benutzerendgeräts (11) an die RFID-Schnittstelle von dem Benutzerendgerät (11) über die RFID-Schnittstelle Authentifizierungsinformationen an die Bedienkonsole (4) übertragen werden und mittels der Authentifizierungsinformationen eine Authentifizierung des Benutzerendgeräts (11) vorgenommen wird,
wobei die Bedienkonsole (4) bei erfolgreicher Authentifizierung eine Datenverbindung über Bluetooth oder WLAN herstellt und über die Datenverbindung Informationen über die Maschine (1), insbesondere Informationen zur Fehlerdiagnose oder Maschinenwartung, wie beispielsweise Zustandsdaten der Maschine (1) und/oder eine Auflistung verwendeter Betriebsparameter und/oder eine Auflistung von im Betrieb detektierten Messwerten, an ein Netzwerk und/oder an ausgewählte Partnergeräte überträgt, insbesondere an das Benutzerendgerät, und
wobei das Herstellen der Datenverbindung das Herstellen einer oder mehrerer Datenverbindungen mit einem oder mehreren anderen Geräten, insbesondere mit dem Benutzerendgerät, und/oder ein Bereitstellen eines, insbesondere zugriffsgeschützten, Netzwerks und/oder die Anmeldung in einem bzw. dem, insbesondere zugriffsgeschützten, Netzwerk umfasst.

## Claims

1. Machine (1) for processing foods and packaging products, comprising control elements (2) for controlling components (3) of the machine (1) and an operating console (4) for operating the machine (1) by means of the control elements (2),
**characterized in that**
the operating console (4) of the machine (1) has an RFID-interface in the form of an NFC-interface and is configured in such a way that an authentication of a user terminal (11) is carried out by means of authentication data received via the RFID-interface, wherein the operating console (4) is configured in such a way that it establishes a data connection in the event of a successful authentication,
wherein the operating console (4) has a WLAN function and/or Bluetooth function and the data connection is established via Bluetooth or WLAN, and
wherein the establishment of the data connection comprises the establishment of one or more data connections with one or more other devices, in particular with the user terminal, and/or the provision of an, in particular access-protected, network and/or the login in the or an, in particular access-protected, network.

2. Machine (1) according to claims 1, wherein the operating console (4) is configured in such a way that one or more protected functions of the operating console (4) can only be accessed after successful authentication of the user terminal (11) via the RFID interface, wherein in particular one, several or all of the protected functions are carried out automatically upon successful authentication of the user terminal (11).

3. Machine (1) according to claim 2, wherein the protected functions comprise activating the or a WLAN function and/or the or a Bluetooth function and/or establishing the data connection.

4. Machine (1) according to one of claims 1 to 3, wherein the operating console (4) is configured in such a way that it uses a first part of data received via the RFID interface for automatic login in an access-protected network and/or that it sends login data for an access-protected network to the user terminal via the RFID interface, in particular for the or an access-protected network or networks provided by the operating console.

5. Machine (1) according to claim 4, wherein the first part of the received data comprises login data for the access-protected network, in particular a security key or a password, and wherein the operating console (4) is configured in such a way that, upon authentication of the user terminal (11), automatic login takes place in the access-protected network using the login data.

6. Machine (1) according to one of claims 1 to 5, wherein the operating console (4) is configured to check whether data received via the RFID interface comprises login data for a protected network, in particular by checking type and/or format of the data, and if this is the case, automatically searches for available networks, and if the login data are valid login data for the or an available, access-protected network, automatically performs a login in this network.

7. Machine (1) according to claim 6, wherein the operating console (4) is configured in such a way that it uses the login data to determine for which available access-protected network the login data is intended, and initiates a login only in this access-protected network, or initiates a login with the received login data in succession in the available networks, until the login was successful in one of the available networks.

8. Machine (1) according to one of claims 1 to 7, wherein the operating console (4) is configured in such a way that it uses a second part of data received via the RFID interface to establish a data connection with a further device.

9. Machine (1) according to claim 8, wherein the operating console (4) is configured in such a way that, upon authentication of a user terminal (11), it automatically searches for potential partner devices with which it is possible to establish the data connection and/or makes the operating console (4) visible to devices as a potential partner device.

10. Machine (1) according to claim 9, wherein the operating console (4) is configured in such a way that, based on the data received via the RFID interface, it automatically selects one or more partner devices from the potential partner devices and automatically establishes a data connection with the selected partner device(s), in particular carries out automatic pairing with the selected partner device(s) via a Bluetooth interface.

11. Machine (1) according to one of the preceding claims, wherein the operating console (4) is configured in such a way that, before the automatic execution of one, several or all of the automatically executable steps, the user is requested to confirm that the respective step is to be carried out, and the respective step is only carried out if the user confirms this, wherein the confirmation is carried out in particular at the operating console (4) or at the user terminal (11).

12. Machine (1) according to one of the preceding claims, wherein the operating console (4) is configured in such a way that the user can select, before any or all of the automatically executable steps are carried out, which of the available automatically executable steps is or are to be carried out, wherein the selection takes place in particular at the operating console (4) or at the user terminal (11).

13. Method for operating and maintaining a machine (1) for processing foods and packaging products, comprising control elements (2) for controlling components (3) of the machine (1) and an operating console (4) for operating the machine (1) by means of the control elements (2),
**characterized in that**
the operating console (4) of the machine (1) has an RFID-interface in the form of an NFC-interface,
when a user terminal (11) approaches the RFID interface, authentication information is transmitted from the user terminal (11) to the operating console (4) via the RFID interface and authentication of the user terminal (11) is carried out by means of the authentication information,
wherein the operating console (4), upon successful authentication, establishes a data connection via Bluetooth or WLAN and, via the data connection, transmits information about the machine (1), in particular information for fault diagnosis or machine maintenance, such as, for example, status data of the machine (1) and/or a list of operating parameters used and/or a list of measured values detected during operation, to a network and/or to selected partner devices, in particular to the user terminal, and
wherein the establishment of the data connection comprises the establishment of one or more data connections with one or more other devices, in particular with the user terminal, and/or the provision of an, in particular access-protected, network and/or the login in the or an, in particular access-protected, network.

## Revendications

1. Machine (1) de traitement de denrées alimentaires et de produits d'emballage, comprenant des éléments de commande (2) pour commander les composants (3) de la machine (1) et une console de commande (4) pour commander la machine (1) au moyen des éléments de commande (2),
**caractérisée**
**en ce que** la console de commande (4) de la machine (1) comporte une interface RFID sous forme d'une interface de communication en champ proche NFC et est conçue de telle sorte qu'une authentification d'un terminal d'utilisateur (11) est effectuée au moyen d'informations d'authentification reçues via l'interface RFID, dans laquelle la console de commande (4) est conçue de telle sorte qu'elle établit une connexion de données lors d'une authentification réussie,
dans laquelle la console de commande (4) comporte une fonction WLAN et/ou une fonction Bluetooth et la connexion de données est établie via Bluetooth ou WLAN, et
dans laquelle l'établissement de la connexion de données comporte l'établissement d'une ou plusieurs connexions de données avec un ou plusieurs autres appareils, en particulier avec le terminal d'utilisateur, et/ou la fourniture d'un réseau, en particulier à accès protégé, et/ou l'enregistrement sur un réseau ou sur le réseau, en particulier à accès protégé.

2. Machine (1) selon la revendication 1, dans laquelle la console de commande (4) est conçue de telle sorte qu'une ou plusieurs fonctions protégées de la console de commande (4) ne sont accessibles qu'après une authentification réussie du terminal d'utilisateur (11) via l'interface RFID, dans laquelle en particulier une, plusieurs ou toutes les fonctions protégées sont exécutées automatiquement lors d'une authentification réussie du terminal d'utilisateur (11) .

3. Machine (1) selon la revendication 2, dans laquelle les fonctions protégées comprennent une activation d'une ou de la fonction WLAN et/ou d'une ou de la fonction Bluetooth, et/ou l'établissement de la connexion de données.

4. Machine (1) selon l'une des revendications 1 à 3, dans laquelle la console de commande (4) est conçue de telle sorte qu'elle utilise une première partie des données reçues via l'interface RFID pour un enregistrement automatique sur un réseau à accès protégé, et/ou de telle sorte qu'elle envoie au terminal d'utilisateur via l'interface RFID des données d'enregistrement sur un réseau à accès protégé, en particulier sur un ou sur le réseau à accès protégé fourni par la console de commande.

5. Machine (1) selon la revendication 4, dans laquelle la première partie des données reçues comprend des données d'enregistrement sur le réseau à accès protégé, en particulier une clé de sécurité ou un mot de passe, et dans laquelle la console de commande (4) est conçue de telle de sorte qu'un enregistrement automatique sur le réseau à accès protégé est effectué en utilisant les données d'enregistrement lors d'une authentification du terminal d'utilisateur (11).

6. Machine (1) selon l'une des revendications 1 à 5, dans laquelle la console de commande (4) est conçue de telle qu'elle vérifie si les données reçues via l'interface RFID comprennent des données d'enregistrement sur un réseau protégé, en particulier par la vérification du type et/ou du format des données, et le cas échéant, cherche automatiquement les réseaux disponibles, et pour autant que les données d'enregistrement sont des données valables pour le réseau ou pour un réseau à accès protégé disponible, effectue automatiquement un enregistrement sur ce réseau.

7. Machine (1) selon la revendication 6, dans laquelle la console de commande (4) est conçue de telle sorte qu'elle détermine, sur base des données d'enregistrement, à quel réseau à accès protégé disponible les données d'enregistrement sont destinées, et initie un enregistrement uniquement sur ce réseau à accès protégé, ou de telle sorte qu'elle initie successivement sur les réseaux disponibles un enregistrement avec les données d'enregistrement reçues, jusqu'à ce que l'enregistrement réussisse sur l'un des réseaux disponibles.

8. Machine (1) selon l'une des revendications 1 à 7, dans laquelle la console de commande (4) est conçue de telle sorte qu'elle utilise une deuxième partie des données reçues via l'interface RFID pour l'établissement d'une connexion de données avec un autre appareil.

9. Machine (1) selon la revendication 8, dans laquelle la console de commande (4) est conçue de telle sorte qu'elle cherche automatiquement des appareils partenaires potentiels avec lesquels l'établissement de la connexion de données est possible lors de l'authentification d'un terminal d'utilisateur (11), et/ou de telle sorte que la console de commande (4) le rend visible pour d'autres appareils comme appareil partenaire potentiel.

10. Machine (1) selon la revendication 9, dans laquelle la console de commande (4) est conçue de telle sorte qu'elle sélectionne automatiquement un ou plusieurs appareils partenaires parmi les appareils partenaires potentiels sur base des données reçues via l'interface RFID et établit automatiquement une connexion de données avec le ou les appareils partenaires sélectionnés, et réalise en particulier un couplage automatique avec le ou les appareils partenaires sélectionnés via une interface Bluetooth.

11. Machine (1) selon l'une des revendications précédentes, dans laquelle la console de commande (4) est conçue de telle sorte qu'avant l'exécution automatique d'une, de plusieurs ou de toutes les étapes exécutables automatiquement, l'utilisateur est invité à confirmer que l'étape correspondante doit être exécutée, et l'étape correspondante n'est exécutée que lorsque l'utilisateur la confirme, dans laquelle la confirmation s'effectue en particulier via la console de commande (4) ou via le terminal d'utilisateur (11).

12. Machine (1) selon l'une des revendications précédentes, dans laquelle la console de commande (4) est conçue de telle sorte qu'avant l'exécution d'une, de plusieurs ou de toutes les étapes automatiquement exécutables, l'utilisateur peut sélectionner laquelle ou lesquelles des étapes automatiquement exécutables disponibles doivent être exécutées, dans laquelle la sélection s'effectue en particulier via la console de commande (4) ou via le terminal d'utilisateur (11).

13. Procédé de préparation et de révision d'une machine (1) de traitement de denrées alimentaires et de produits d'emballage comprenant des éléments de commande (2) pour commander les composants (3) de la machine (1) et une console de commande (4) pour commander la machine (1) au moyen des éléments de commande (2),
**caractérisé en ce que** la console de commande (4) de la machine (1) comporte une interface RFID sous forme d'une interface NFC,
dans lequel, lorsqu'un terminal d'utilisateur (11) s'approche de l'interface RFID du terminal d'utilisateur (11), des informations d'authentification sont transférées à la console de commande (4) via l'interface RFID et une authentification du terminal d'utilisateur (11) est effectuée au moyen des informations d'authentification,
dans lequel la console de commande (4) établit une connexion de données via Bluetooth ou WLAN lors d'une authentification réussie et transfère à un réseau et/ou à des appareils partenaires sélectionnés, en particulier au terminal d'utilisateur, via la connexion de données, des informations concernant la machine (1), en particulier des informations de diagnostic d'erreur ou de révision de la machine, telles que des données d'état de la machine (1) et/ou une liste de paramètres de fonctionnement utilisés et/ou une liste de valeurs de mesure détectées en service, et
dans lequel l'établissement de la connexion de données comporte l'établissement d'une ou plusieurs connexions de données avec un ou plusieurs autres appareils, en particulier avec le terminal d'utilisateur, et/ou la fourniture d'un réseau, en particulier à accès protégé, et/ou l'enregistrement sur un réseau ou sur le réseau, en particulier à accès protégé.
